# EUROPÄISCHE PATENTSCHRIFT

(11) **EP 2 124 405 B1**
(45) Veröffentlichungstag und Bekanntmachung des Hinweises auf die Patenterteilung: **29.08.2018**
(21) Anmeldenummer: 09006642.4
(22) Anmeldetag: 16.05.2009
(51) Int. Cl.: H04L 25/02

(54) **ANORDNUNG UND VERFAHREN ZUR DRAHTLOSEN ÜBERTRAGUNG VON PHASENKRITISCHEN SIGNALEN BEI VARIABLER LÄNGENÄNDERUNG DER ÜBERTRAGUNGSSTRECKE**
ASSEMBLY AND METHOD FOR WIRELESS TRANSMISSION OF PHASE-CRITICAL SIGNALS IN VARIABLE LENGTH ALTERATION OF THE TRANSMISSION PATH
AGENCEMENT ET PROCÉDÉ DE TRANSMISSION SANS FIL DE SIGNAUX DE PHASE CRITIQUE EN CAS DE MODIFICATION DE LONGUEUR VARIABLE DE LA VOIE DE TRANSMISSION

(30) Priorität: 19.05.2008 DE 102008024134
(43) Veröffentlichungstag der Anmeldung: 25.11.2009
(73) Patentinhaber: Airbus Defence and Space GmbH, 82024 Taufkirchen (DE)
(72) Erfinder: Fritzel, Torsten, 81925 München (DE); Steiner, Hans-Jürgen, 81827 München (DE)
(74) Vertreter: Frenkel, Matthias Alexander

(56) Entgegenhaltungen:
- DE-A1- 10 226 329
- US-A1- 2007 178 837

## Beschreibung

Die vorliegende Erfindung betrifft eine Vorrichtung, eine Anordnung und ein Verfahren zur drahtlosen Übertragung eines elektrisch komplexen Signals bei der auch die Länge der Übertragungsstrecke gemessen wird und zwar zwecks Korrektur des Phasenganges bei Längenänderung der Übertragungsstrecke.

Besondere Bedeutung hat diese Methode z.B. bei der komplexen Charakterisierung vor allem großer elektromagnetischer Felder, insbesondere für Antennen-Nahfeldmessungen, denn dadurch könnten z.B. schwebende bzw. fliegende und sich bewegender Plattformen zum Positionieren von Antennenmesssonden eingesetzt werden bei denen eine leitungsgebundene Übertragung von komplexen Signalen, z.B. Mess- oder Referenzsignale, nicht möglich ist bzw. nur unter hohem Risiko / Aufwand realisierbar wäre.

### Stand der Technik

Zur komplexen Charakterisierung elektromagnetischer Felder, insbesondere im Falle von Hochfrequenz bzw. Antennen-Nahfeldmessungen, ist im Stand der Technik die leitungsgebundene Signalübertragung bekannt.

Die Verwendung der leitungsgeführten Signalübertragung ist allerdings auf stationäre und in der Größe limitierten Messanlagen beschränkt und zwar auf Grund limitierter Längen bei der Führung bewegter und phasenempfindlicher Hochfrequenzleitungen.

Ein Problem, welches im Falle einer drahtlosen Übertragung des Messsignals auftritt, ist, dass durch die kontinuierliche Längenänderung der drahtlosen Übertragungsstrecke zwischen der fliegenden Plattform und der Bodenstation, das Problem der Phasenänderung auftritt, welches auf Grund der konstanten Leitungslänge bei einer leitungsgebundenen Übertragung nicht oder nur im geringen Maße durch Dehnung oder Verdrehung der Leitung vorkommt.

US 2007/178837 A1 offenbart Techniken zum Implementieren von Datenkommunikation und Entfernungsmessung, für den Fall dass sich Datenkommunikation und Entfernungsmessung dieselbe physikalische Schicht teilen.

DE 102 26 329 A1 offenbart ein mobiles Telekommunikationsendgerät mit Messfunktion. Das Telekommunikationsgerät ermöglicht die Messung von Längen, Winkeln und/oder Geschwindigkeiten.

### Aufgabe der Erfindung

Es ist eine Aufgabe der Erfindung eine Vorrichtung, eine Anordnung und ein Verfahren zu beschreiben, welche eine drahtlose Übertragung eines komplexen Signals erlaubt und eine Möglichkeit bietet den Phasengang zu korrigieren, welcher durch Längenänderung der Übertragungsstrecke verursacht wird, wobei sichergestellt wird dass die gemessenen Distanzen der Übertragungsstrecke entspricht; abgesehen von einem eventuellen Versatz in Längsrichtung.

### Lösung der Aufgabe

Die Aufgabe wird gelöst durch eine Vorrichtung nach Anspruch 1, eine Anordnung nach Anspruch 2 und ein Verfahren nach Anspruch 6.

Vorteilhafte Ausprägungen der Erfindung sind in den Unteransprüchen zu finden.

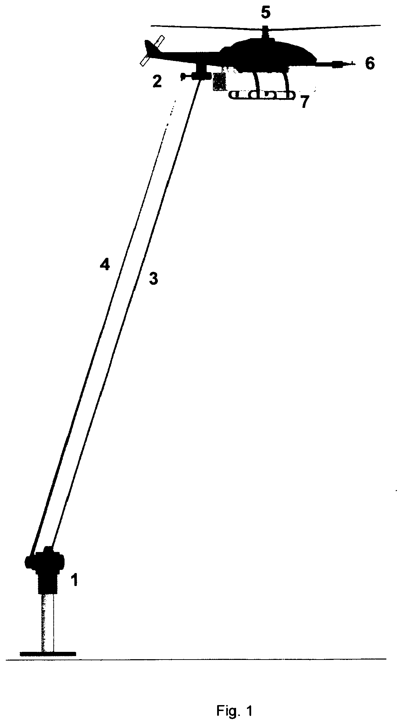

Nachfolgend werden anhand der Fig. 1 spezielle Ausführungsbeispiele der vorliegenden Erfindung erläutert.

Es zeigen:
Fig. 1 - Eine mögliche Realisierungsvariante der Erfindung (lasertechnischer Ansatz)

### Anordnung

Die Fig. 1 zeigt eine Anordnung gemäß der vorliegenden Erfindung. Diese umfasst eine bodenseitige Einrichtung (1) und eine sich bewegende Plattform (5).

Die bodenseitige Einrichtung (1) ist eingerichtet zum Messen der Länge der Übertragungsstrecke von der bodenseitigen Einrichtung (1) zur sich bewegenden Plattform (5). Ferner überträgt die bodenseitige Einrichtung (1) komplexe Mess- bzw. Referenzsignale.

Fig. 1 zeigt nicht die bodenseitige Hochfrequenz-Instrumentierung zur Erzeugung der Mess- bzw. Referenzsignale zur weiteren Signalauswertung.

Die Komponenten für die Entfernungsmessung und für die Signalübertragung sind auf einer gemeinsamen Bewegungsachse montiert. Dadurch wird sichergestellt, dass die gemessenen Distanzen der Übertragungsstrecke entspricht; abgesehen von einem eventuellen Versatz in Längsrichtung.

Mit anderen Worten: Die Einrichtungen zur Übertragung des elektrisch komplexen Messsignals werden so neben den entfernungsmessenden Einrichtungen angeordnet, dass die Entfernungsänderungen beider Einrichtungen immer gleich sind.

Im gezeigten Beispiel (Fig. 1) wird das elektrische Messsignal auf einen Freiraumlaserstrahl moduliert und optisch parallel zur Entfernungsmessstrecke übertragen.

Die Fig. 1 zeigt ferner eine sich bewegende Plattform (5), z.B. ein ferngesteuerter Miniatur-Hubschrauber. Die Plattform (5) verursacht durch ihre Bewegung eine kontinuierliche Änderung der Länge der Übertragungsstrecke. Dadurch wird ein erheblicher Phasengang verursacht, welchen es z.B. für die Anwendung der Antennennahfeldmesstechnik zu kompensieren gilt.

Die Plattform (5) umfasst eine plattformseitige Einrichtung (2). Die Einrichtung (2) ist Ziel der Längenmessung, z.B. eines Laserstrahls (3). Ferner ist die Einrichtung (2) Quelle oder Empfangsteil für das zu übertragende (Hochfrequenz-) Mess- bzw. Referenzsignal.

Die Plattform (5) umfasst ferner einen Antennen-Sensor (6) zum z.B. Detektieren eines Antennenstrahlungsfeldes und eine Sende- und/oder Empfangseinrichtung (7) zum Betreiben des Feldsensors (6) und zur Umsetzung in ein optisches Übertragungsmedium.
In weiteren Ausführungsformen der Erfindung sind, im Vergleich zu oben beschriebenen Ausführungsformen, die Einrichtung (1) selbst bewegt und die Plattform (5) stationär bzw. die Einrichtung (1) und die Plattform (5) beide bewegt. Die sich bewegenden Einrichtungen (1) oder Plattformen (5) können dabei bodengebunden sein oder nicht (z.B. fliegen oder an einem Kran schwebend).

In weiteren Beispiele sind die Laserstrahlen (3) und (4) zu einem Strahl zusammengesetzt. Dies ist gemäß Erfindung für jede der obigen Ausführungsformen möglich.

In weiteren Beispiele können statt der oben beschriebenen optischen Variante, welche einen Laserstrahl verwendet, als Übertragungsmedium auch elektromagnetische oder akustische Medien verwendet werden. Dies ist gemäß Erfindung für jede der obigen Ausführungsformen möglich.

### Verfahren

Als einen ersten Schritt umfasst das erfindungsgemäße Verfahren ein genaues und zeitgleiches Vermessen der Länge der Übertragungsstrecke.
Dies kann durch Entfernungsmessmethoden unterschiedlicher bekannter Methoden erfolgen z.B. durch satellitengestützte Entfernungsmessung oder durch Ultraschallmessungen. Die dargestellte Methode beruht auf einer optischen Entfernungsmessung, wie z.B. durch Laserinterferometrie.

Die Einrichtungen zur Übertragung des elektrisch komplexen Messsignals werden so neben den entfernungsmessenden Einrichtungen angeordnet, dass die Entfernungsänderungen beider Einrichtungen immer gleich sind. Im gezeigten Beispiel wird das elektrische Messsignal auf einen Freiraumlaserstrahl moduliert und optisch parallel zur Entfernungsmessstrecke übertragen.

Mit dieser gewonnenen Information kann durch einschlägige Methoden zeitnah die Phase korrigiert werden z.B. durch entsprechende elektrische Phasenschieber. Eine andere Methode den Phasengang zu korrigieren ist durch entsprechende Nachbehandlung bzw. Nachbearbeitung (Post-Processing) über den gemessenen Wegunterschied und der Wellenlänge des Hochfrequenzsignals heraus zu rechnen.

Dadurch wird das Phasenproblem gelöst.

Das beschriebene Verfahren ist für alle oben beschriebenen Ausführungsformen der Erfindung verwendbar.

Besonders große Vorteile ergeben sich aus der Erfindung durch (1) wesentlich verbesserte Mess- und Verifikationsmöglichkeiten großer und stationärer Antenneneinrichtungen und großer Objekte wie z.B. Flugzeuge bei denen die Strahlungseigenschaften von Antennen im eingebauten Zustand von besonderem Interesse sind und (2) gleiches gilt für Installationen mit hoher Antennendichte, welche sich gegenseitig beeinflussen können, wie z.B. vor allem auf militärischen Schiffen aber auch bei gedrängten Mobilfunk-Sendeinstallationen.

Eine andere Anwendung ist die Vermessung großer Satellitenbodenstationsantennen bzw. Radioteleskopantennen.

Neben der Antennenmesstechnik kann die beschriebene Anordnung in leicht modifizierter Weise auch zur Validierung von z.B. satelliten- und/oder terrestrischen Navigations- / Positionssignalen dienen innerhalb relativ großer Messvolumen. Hierzu müsste die Antennenmesssonde (6) mit einer z.B. GPS / Galileo Antennen ausgetauscht werden. Die in (7) generierten Positionsdaten könnten dann mit den wesentlich genaueren Positionsmessungen der Lasermesseinrichtung (1) & (2) verglichen werden.

## Patentansprüche

1. Vorrichtung (1) zur drahtlosen Übertragung von phasen-kritischen Signalen umfassend eine Einrichtung zur Messung der ändernden Länge einer Übertragungsstrecke zu einer Plattform (5) eine Einrichtung zur Übertragung komplexer Mess- bzw. Referenzsignale, wobei
zumindest Bestandteile der Einrichtung zur Übertragung komplexer Mess- bzw. Referenzsignale neben zumindest Bestandteile der Einrichtung zur Messung der ändernden Länge der Übertragungsstrecke zu einer Plattform (5) angeordnet ist, so dass die Änderungen der Länge der Übertragungsstrecke für beide Einrichtungen immer gleich ist, und
wobei die zumindest Bestandteile der Einrichtung zur Messung der ändernden Länge der Übertragungsstrecke und die zumindest Bestandteile der Einrichtung zur Übertragung komplexer Mess- bzw. Referenzsignale auf einer gemeinsamen Bewegungsachse montiert sind.

2. Anordnung umfassend eine Plattform (5) und eine Vorrichtung (1) gemäß Anspruch 1.

3. Anordnung nach Anspruch 2, wobei die Vorrichtung (1) eine stationäre bodenseitige Einrichtung ist und die Plattform (5) eine sich bewegende Plattform ist.

4. Anordnung nach Anspruch 2, wobei sowohl die Vorrichtung (1) eine sich bewegende Einrichtung ist und die Plattform (5) eine sich bewegende Plattform ist.

5. Anordnung nach Anspruch 2, wobei die Vorrichtung (1) eine sich bewegende Einrichtung ist und die Plattform (5) eine stationäre Plattform ist.

6. Verfahren zur drahtlosen Übertragung von phasen-kritischen Signalen für eine Vorrichtung gemäß Anspruch 1 bzw. für eine Anordnung gemäß einem der Ansprüche 2 bis 5 umfassend den Schritt, wobei komplexe Mess- bzw. Referenzsignale übertragen werden und dass ein Vermessen der ändernden Länge der Übertragungsstrecke zeitgleich erfolgt.

## Claims

1. An apparatus (1) for the wireless transmission of phase-critical signals, comprising
a device for measuring the changing length of a transmission path to a platform (5),
a device for transmitting complex measurement and/or reference signals,
wherein at least components of the device for transmitting complex measurement and/or reference signals is arranged adjacent to at least components of the device for measuring the changing length of the transmission path to a platform (5) such that the changes in the length of the transmission path is always the same for both devices, and
wherein at least components of the device for measuring the changing length of the transmission path and at least components of the device for transmitting complex measurement and/or reference signals are mounted on a common axis of motion.

2. An arrangement comprising a platform (5) and a device (1) according to claim 1.

3. The arrangement according to claim 2, wherein the device (1) is a stationary, ground-side device and the platform (5) is a moving platform.

4. The arrangement according to claim 2, wherein both the device (1) is a moving device and the platform (5) is a moving platform.

5. The arrangement according to claim 2, wherein the device (1) is a moving device and the platform (5) is a stationary platform.

6. A method for the wireless transmission of phase-critical signals for a device according to claim 1 and/or for an arrangement according to any one of claims 2 to 4, comprising
the step in which complex measurement and/or reference signals are transmitted and a measurement of the changing length of the transmission path occurs at the same time.

## Revendications

1. Appareil (1) de transmission sans fil de signaux à phase critique, comprenant un dispositif de mesure de la longueur variable d'un trajet de transmission allant jusqu'à une plate-forme (5),
un dispositif de transmission de signaux de mesure et/ou de référence complexes,
au moins des éléments du dispositif de transmission de signaux de mesure et/ou de référence complexes étant disposés de manière adjacente à au moins des éléments du dispositif de mesure de la longueur variable du trajet de transmission allant jusqu'à une plate-forme (5) de sorte que les variations de la longueur du trajet de transmission soit toujours identiques même pour les deux dispositifs, et
au moins les éléments du dispositif de mesure de la longueur variable du trajet de transmission et au moins les éléments du dispositif de transmission de signaux de mesure et/ou de référence complexes étant montés sur un axe de mouvement commun.

2. Agencement comprenant une plate-forme (5) et un appareil (1) selon la revendication 1.

3. Agencement selon la revendication 2, dans lequel l'appareil (1) est un dispositif stationnaire côté sol et la plate-forme (5) est une plate-forme mobile.

4. Agencement selon la revendication 2, dans lequel à la fois l'appareil (1) est un dispositif mobile et la plate-forme (5) est une plate-forme mobile.

5. Agencement selon la revendication 2, dans lequel l'appareil (1) est un dispositif mobile et la plate-forme (5) est une plate-forme stationnaire.

6. Procédé de transmission sans fil de signaux à phase critique destiné à un appareil selon la revendication 1 et ou destiné à un agencement selon l'une des revendications 2 à 4, comprenant
l'étape dans laquelle des signaux de mesure et/ou de référence complexes sont transmis et une mesure de la longueur variable du trajet de transmission est effectuée en même temps.
